# EUROPÄISCHE PATENTSCHRIFT

(11) **EP 1 261 966 B1**
(45) Veröffentlichungstag und Bekanntmachung des Hinweises auf die Patenterteilung: **08.06.2005**
(21) Anmeldenummer: 00993198.1
(22) Anmeldetag: 22.11.2000
(51) Int. Cl.: G10L 15/22

(54) **VERFAHREN UND VORRICHTUNG ZUR SPRACHERKENNUNG SOWIE EIN TELEKOMMUNIKATIONSSYSTEM**
METHOD AND DEVICE FOR VOICE RECOGNITION AND A TELECOMMUNICATIONS SYSTEM
PROCEDE ET DISPOSITIF DE RECONNAISSANCE VOCALE ET SYSTEME DE TELECOMMUNICATION

(30) Priorität: 25.11.1999 DE 19956747
(43) Veröffentlichungstag der Anmeldung: 04.12.2002
(73) Patentinhaber: SIEMENS AKTIENGESELLSCHAFT, 80333 München (DE)
(72) Erfinder: BAUER, Josef, 80797 München (DE)
(86) Internationale Anmeldenummer: PCT/DE2000/004121
(87) Internationale Veröffentlichungsnummer: WO 2001/039176

(56) Entgegenhaltungen:
- EP-A- 1 081 683
- WO-A-87/07460
- DE-C- 19 515 123
- GB-A- 2 102 171
- NAIK D: "USING TALKER LOCATION TO DETECT SPURIOUS UTTERANCES IN DESKTOP COMMAND AND CONTROL" IEEE INTERNATIONAL CONFERENCE ON ACOUSTICS, SPEECH, AND SIGNAL PROCESSING (ICASSP),US,LOS ALAMITOS,CA: IEEE COMP. SOC. PRESS, 21. April 1997 (1997-04-21), Seiten 3265-3268, XP000788057 ISBN: 0-8186-7920-4

## Beschreibung

Die vorliegende Erfindung betrifft ein Verfahren zur Spracherkennung gemäß dem Oberbegriff des Patentanspruchs 1, eine Vorrichtung gemäß dem Oberbegriff des Patentanspruchs 11 sowie ein Telekommunikationssystem.

In dem Bereich der Mensch-Maschine-Kommunikation sind überwiegend Ansätze zur Auswertung des Informationsgehaltes der menschlichen Sprache anzutreffen, da gerade das gesprochene Wort im alltäglichen Leben der Menschen zur leichten, schnellen und sehr kompakten Übermittlung von gezielter Information einen hohen Stellenwert besitzt. Aufgrund der flächendeckenden Verfügbarkeit und des vertrauten Umgangs hat sich das Telefon als Übertragungsmedium für das gesprochene Wort im Alltagsleben durchgesetzt. Mit dem Ziel einer Erleichterung und Automatisierung einfacher Teile des Informationsaustausches zwischen Mensch und Maschine via Telefon werden beispielsweise bei der Bestellungsannahmen in Call-Centern oder im Zuge des Tele-bankings Auskunfts- und Auftragsannahmesysteme in Banken mit Verfahren und Vorrichtungen zu Spracherkennung eingesetzt.

Bisher bekannte nutzerunabhängige Verfahren und Vorrichtungen der Spracherkennung weichen oftmals von dem am Telefon vertrauten, spontanen und natürlichen Umgang der Menschen erheblich ab. Fehlfunktionen in Form von Spracherkennungsfehler sind bei bekannten Systemen häufig, da bekannte Analyseverfahren empfindlich auf Besonderheiten der jeweiligen Eingabesignale reagieren, wie z.B. die Sprechweise eines Benutzers. So steigt die Fehlerrate z.B. bei starken Hintergrundgeräuschen und auch bei sehr schnellen oder zu langsamen Sprechen bei per Telefon übertragenen Sprachsignalen stark an. Dadurch können nahezu unbrauchbare Ergebnisse geliefert werden. Zur Behebung dieses Problems ist es bekannt, den Anwender aufzufordern nochmals deutlich zu sprechen. Es wird dann eine automatische Ansage erzeugt, die folgendermaßen lauten kann: "Ich habe Sie nicht verstanden, bitte sprechen Sie deutlicher".

Zur Verbesserung der Spracherkennung unter Beibehaltung eines möglichst natürlichen Sprechrhythmus in der menschlichen Sprache werden komplexe Verfahren zur gesonderten Anpassung der Maschine an jeden einzelnen Anwender vorgeschlagen, wie sie z.B. in einer Zusammenfassung in dem Buch "Anwendungsspezifische Online-Anpassung von Hidden-Markov-Modellen in automatischen Spracherkennungssystemen" von Udo Bub, Herbert Utz Verlag, München, 1999, dargestellt sind.

Ein weiteres bekanntes Verfahren zur Spracherkennung wird in der Patentschrift WO-A-87/07460 offenbart.

Es ist die Aufgabe der vorliegenden Erfindung, ein Verfahren, eine Vorrichtung sowie ein Telekommunikationssystem zur nutzerunabhängigen Spracherkennung zu schaffen, wobei die Akzeptanz des Anwenders durch ein natürliches, dem menschlichen Gebrauch angepaßtes Verfahren bzw. durch eine Vorrichtung zur Umsetzung dieses Verfahrens bzw. ein dementsprechendes Telekommunikationssystem gesteigert wird.

Diese Aufgabe wird durch ein Verfahren mit den Merkmalen des Patentanspruchs 1, durch eine Vorrichtung gemäß Patentanspruch 11 bzw. durch ein Telekommunikationssystem gemäß Anspruch 13 gelöst.

Das Verfahren umfaßt das Analysieren eines Sprechparameters während der Spracherkennung, wobei bei Überschreitung eines Schwellwertes durch den Sprechparameter an den Anwender eine Aufforderung ausgegeben wird, die konkret auf die Wiedereinhaltung des für den Sprechparameter festgelegten Wertebereichs gerichtet ist. Während in bekannten Verfahren von dem Benutzer eine starre Anpassung an das System verlangt wird, so daß die Akzeptanz des Benutzers u.a. aufgrund eines damit verbundenen Mangels an Natürlichkeit absinkt, analysiert ein erfindungsgemäßes Verfahren die Qualität des eingehenden Sprachsignals und fordert den Anwender mittels einer Nachricht, die anhand des Sprechparameters individualisiert ist, zu einer erneuten Spracheingabe auf. Es wird also der Anwender gezielt zu einer aktiven Anpassung seiner Sprechweise bewegt.

Definitionen von Sprechparametern der in Frage kommenden Parameter des zu verarbeitenden Sprachsignals eines Menschen bzw. Anwenders sind in den Unteransprüchen beispielhaft aufgeführt. Im Rahmen einer möglichen Umsetzung eines erfindungsgemäßen Verfahrens kann der Anwender in einer bevorzugten Ausführungsform konkret den Satz "Sprechen Sie bitte etwas leiser" zu hören bekommen, ganz so wie bei der Unterhaltung mit einem anderen Menschen auch.

In einer Weiterbildung können für einen Sprechparameter auch mehrere Schwellwerte festgelegt werden. Bei Überschreiten der unterschiedlichen Schwellwerte wird die Aussagekraft der auszugebenden Nachricht entsprechend angepaßt. Damit ergibt sich speziell in dem vorstehend beispielhaft dargestellten Fall der Korrektur in Bezug auf die Lautstärke eine Korrekturbandbreite von "leiser", "etwas lauter" bis "lauter".

Anhand des Sprechparameters kann eine Kenngröße für die Qualität des eingehenden Sprachsignals bestimmt werden, die auch als Hinweis für die Güte der Spracherkennung ausgewertet werden kann. Auch kann anhand anhaltender Schwellwertüberschreitungen ein systematischer Fehler erkannt werden. Wird z.B. auf einem Übertragungskanal eines mit einem erfindungsgemäßen Spracherkennungsvorrichtung versehenen Telekommunikationssystems derartiges festgestellt, so kann im Rahmen des beschriebenen Verfahrens eine Kanalmessung veranlaßt werden. In diesem Fall kann es erfindungsgemäß sogar vorgesehen sein, den Anwender unter Hinweise auf eine vermutete Störung zur Benutzung eines anderen Telefonendgerätes aufzufordern.

Weiter umfaßt eine erfindungsgemäße Vorrichtung zur Spracherkennung mit mindestens einer Einrichtung zum Verarbeiten digitalisierter Daten eines Sprachsignals und einer Einrichtung zur Sprachausgabe, mit
- Einrichtungen zur Analyse und Überwachung eines Sprechparameters,
- einer Einrichtung zum Feststellen einer Überschreitung des Sprechparameters und
- einer Einrichtung zur Erzeugung und Ausgabe eines in Abhängigkeit von der Überschreitung eines Schwellwert für den Sprechparameter generierten Hinweises in digitaler oder analoger Form, insbesondere einer Sprachsyntheseeinrichtung, sowie
- einer Einrichtung zur Übermittlung des Hinweises an einen das Sprachsignal erzeugenden Anwender.

Ein erfindungsgemäßes Telekommunikationssystem umfaßt demnach
- einer Vielzahl von Telefonendgeräten,
- Wandlereinrichtungen zur Digital/Analog- und Analog/Digital- Wandlung und Signalaufbereitung,
- einer Verbindungsleitung für jedes der Telefonendgeräte,
- Kanalbündelungs- und Kanalaufzweigungsmitteln,
- mindestens einer Vermittlungsstelle und
- eine Einrichtung zur Spracherkennung.

Vorteilhafte Weiterbildungen eines erfindungsgemäßen Verfahrens zur Spracherkennung bzw. einer erfindungsgemäßen Vorrichtung sind Gegenstand von Unteransprüchen.

Die vorliegende Vorrichtung zur Spracherkennung unter Anwendung eines erfindungsgemäßen Verfahrens wird im folgenden unter Bezugnahme auf die zugehörigen Zeichnungen näher erläutert. Sie zeigen:
- Fig. 1: einen Prinzipschaltplan eines erfindungsgemäßen Telekommunikationssystems und
- Fig. 2: ein Flußdiagramm einer Spracherkennungseinrichtung.

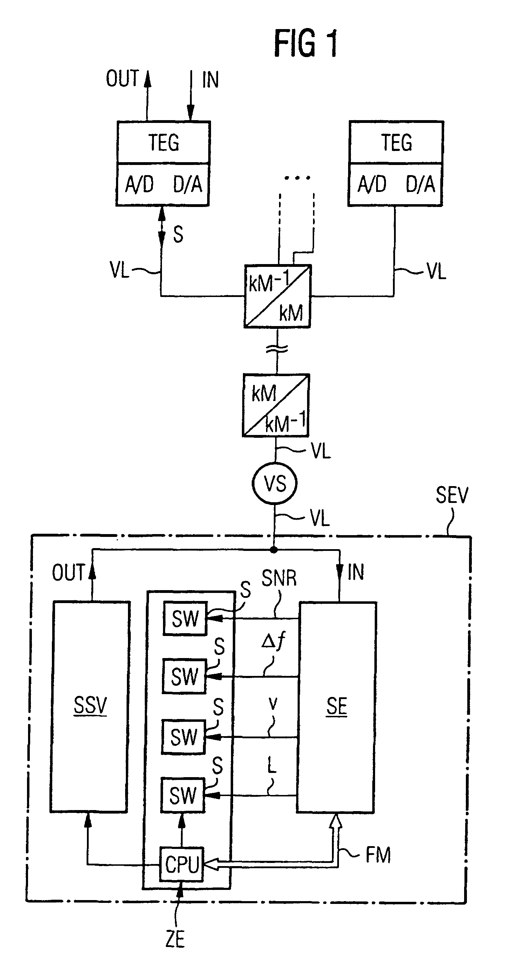

In Figur 1 ist eine schematische Ansicht einer erfindungsgemäßen Vorrichtung in Form eines Telekommunikationssystems dargestellt, das nach dem erfindungsgemäßen Verfahren arbeitet. Es ist ein Telekommunikationssystem dargestellt, das eine Vielzahl von Telefonendgeräten TEG umfaßt, die Wandlereinrichtungen zur Digital/Analog- und Analog/Digital- Wandlung A/D, D/A sowie integrierter Signalaufbereitung enthalten. Die dargestellten Telefonendgeräte TEG können also digital arbeitende Geräte u.a. handelsübliche EURO-ISDN-Geräte nach dem Standard der Deutschen Telekom sein. Die Telefonendgeräte TEG sind mit einer Verbindungsleitung VL für jedes der Telefonendgeräte TEG mit Kanalbündelungs- und Kanalaufzweigungsmitteln KM, KM⁻¹ verbunden, so daß die Sprachsignale S in digitalisierter Form über eine Vermittlungsstelle VS auf den Verbindungsleitungen VL zu einer Einrichtung zur Spracherkennung SEV gelangen.

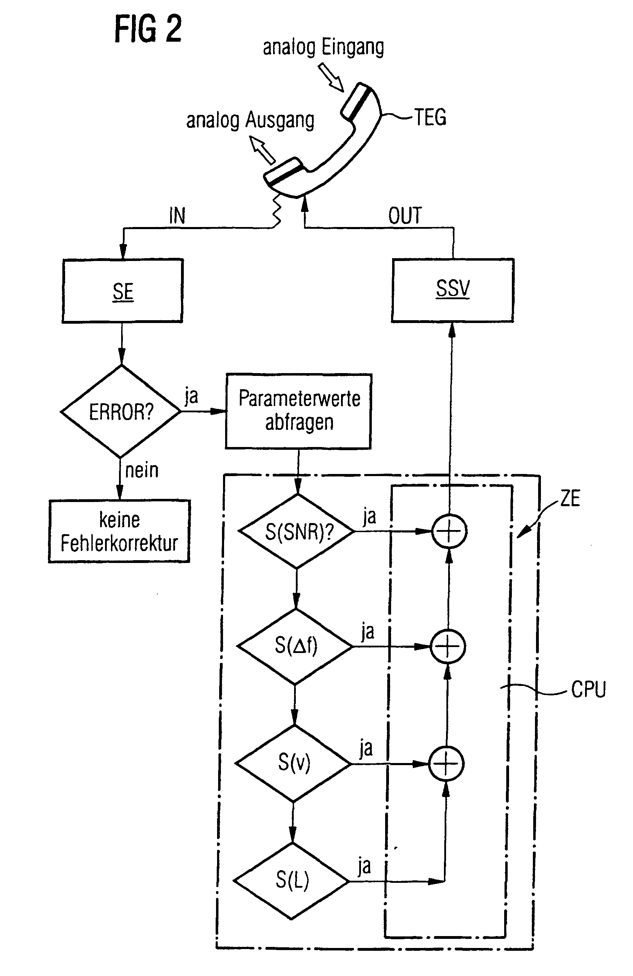

Die Einrichtung zur Spracherkennung SEV ist in eine Spracherkennungseinrichtung SE zur Verarbeitung des Eingangssignals IN und eine Sprachsyntheseeinrichtung SSV unterteilt. In der Spracherkennungseinrichtung SE (Fig. 2) wird eine Fehleruntersuchung bei der Spracherkennung durchgeführt. Bei Auftreten eines Fehlers oder bei Erreichen einer Fehlerquote wird eine Fehlermeldung FM zusammen mit bestimmten, bei der Spracherkennung ermittelten Parametern an eine Auswertelogik gesandt. Hier werden die einzelnen Parameter auf eine Überschreitung eines jeweiligen Schwellenwertes S untersucht.

Als Parameter werden Eigenschaften eines Sprachsignals abgebildet, die einen wesentlichen Einfluß auf die Fehlerquote bei der Spracherkennung ausüben. Nachfolgend werde einige Beispiele für derartige Parameter vorgestellt:
Ein solcher Parameter ist die Lautstärke L des Sprachsignals. Der Wert des Parameters L kann aus dem analogen wie auch dem digitalen Sprachsignal gewonnen werden. Von der Spracherkennungseinrichtung SEV kann kein Einfluß auf die Eingangsverstärkung des Sprachsignals an einem Telefonendgerät TEG (Fig. 1), da diese Geräte mit festen Eigenschaften systembedingt unabhängig sind, und das von der nachgeschalteten Übertragungsstrecke sowie von den Anforderungen der Spracherkennungseinrichtung SEV als Empfangsgerät ausgeübt werden.

Die Ausgabe einer akustischen Nachricht an den Anwender kann durch den Einsatz gestaffelter Schwellwerte präzisiert werden. So wird bei Überschreitung der entsprechenden Schwellwerte für die Lautstärke L der Sprecher aufgefordert leiser, etwas lauter bzw. lauter zu sprechen.

Ein weiterer Parameter ist der Signal-Rausch-Abstand SNR eines Sprachsignals. Ist der Signal-Rausch-Abstand SNR in dem an der Spracherkennungseinrichtung SE anliegenden Sprachsignal IN zu gering, so kann die Sprache nicht fehlerfrei erkannt werden. Es gibt zwar einige Möglichkeiten, den Signal-Rausch-Abstand automatisch zu verbessern, wie z.B. spezielle digitale Filterverfahren, deren Filterparameterwerte dem aktuellen Fall entsprechend eingestellt werden oder auch Verfahren wie die Autokorrelation zur nachträglichen Verbesserung der Kanalübertragungseigenschaften.

Bei einer Überschreitung des Schwellwertes für den Signal-Rausch-Abstand SNR kann zunächst die Lautstärke L geprüft werden. Ist die Lautstärke gering, so wird, auch wenn der für die Lautstärke geltende Schwellwert noch nicht unterschritten ist, der Sprecher aufgefordert lauter zu sprechen. Hierdurch stellt sich ein größerer Signal-Rausch-Abstand ein. Ist der sich hierdurch ergebende Signal-Rausch-Abstand immer noch nicht ausreichend oder ist die Lautstärke L nicht gering, so liegen ungünstige Umstände vor. Z.B. kann der Sprecher in einem lauten Umfeld sprechen (bspw. Wartehallen von Bahnhöfen und Flughäfen) oder die Übertragung ist gestört. Der Sprecher wird dann bspw. aufgefordert, von einem anderen Ort oder einem anderen Telefon zu sprechen.

Ein weiterer wichtiger Parameter ist die Sprechgeschwindigkeit v, die zu hoch oder zu niedrig liegen kann. Die Sprechgeschwindigkeit v wird beispielsweise durch eine Messung der Phoneme pro Zeit festgestellt, wobei unter dem Begriff der Phoneme die kleinste linguistische Grundeinheit einer Sprache verstanden wird, die bedeutungsunterscheidend ist. Wie ein Mensch auch kann eine Maschine zu schnell gesprochener Sprache und einer dementsprechend raschen Abfolge von Phonemen nicht mehr folgen, wodurch die Fehlerquote stark ansteigt. Insbesondere ist bekannt, daß die Erkennungsrate bei Zifferneingabe erheblich mit zunehmender Sprechgeschwindigkeit absinkt. Bei Satzerkennungsverfahren, die mehrere Wörter oder ganze Sätze auf einmal verarbeiten, macht hingegen auch eine zu geringe Sprechgeschwindigkeit Probleme, da das System nun ungewöhnlich lange auf das Eintreffen eines Sprachstücks, das es verarbeiten kann, warten muß.

Der Sprecher wird bei Überschreitung der entsprechenden Schwellwerte aufgefordert, langsamer oder schneller zu sprechen.

Als eine weitere Quelle für eine erhöhte Fehlerquote bei der Spracherkennung sind spektrale Eigenschaften des Sprachsignals anzugeben. Das durch die Übertragung per Telefon auf ein enges Frequenzband beschränkte Sprachsignal weist bei allen menschlichen Sprechern Gemeinsamkeiten auf, die bei der Spracherkennung genutzt werden können. In Abhängigkeit von den jeweils eingesetzten Aufnahmemikrophonen kann es hier schon zu Unterschieden kommen. Da in Telefonendgeräten jedoch stets qualitativ ungefähr gleichwertige Aufnahmemikrophone eingesetzt werden, ist dieser Einfluß vernachlässigbar gegenüber dem Einfluß des Winkels und des Abstandes, unter dem in das Aufnahmemikrophon gesprochen wird. Durch eine Abweichung in der Lautstärke und in den spektrale Eigenschaften des Sprachsignals kann erkannt werden, daß ein Sprecher nicht direkt und aus kurzer Distanz in ein Aufnahmemikrophon spricht. Als Parameter wird daher eine spektrale Frequenzabweichung Δf festgelegt, dessen Wert durch eine Richtcharakteristik des Aufnahmemikrophons zusammen mit einem Einfallswinkel des Sprachsignals auf das Aufnahmemikrophon erzeugt wird.

Eine Überschreitung der Schwellwerte der spektralen Frequenzabweichung bedeutet somit, daß der Sprecher nicht das Mikrofon bzw. den Hörer eines Telefons vor seinem Mund angeordnet hat. In einem solchen Fall wird der Sprecher aufgefordert, das Mikrofon nahe an seinem Mund anzuordnen.

Die genannten Parameter stellt mithin einen Gütemaßstab für das zu erkennende Sprachsignal IN dar. In der Ausführungsform von Fig. 1 wird das in die SEV eingehende digitalisierte Sprachsignal IN nun direkt in die Spracherkennung SE eingegeben. Hier wird eine laufende Fehlerkontrolle durchgeführt. Im Fall des Auftretens von Fehlern werden die Werte der Parameter Signal-Rausch-Abstand SNR, spektrale Frequenzabweichung Δf, Sprechgeschwindigkeit v und Lautstärke L an eine Zentraleinheit ZE geliefert. Hier sind Schwellwertmeßeinrichtungen SW angeordnet, die bei Überschreitung eines jeweiligen Schwellenwertes S für die genannten Parameter ein eigenes Steuersignal an eine Sprachsyntheseeinrichtung SSV aussenden. Diese Schritte laufen alle in Echtzeit ab, um das Eingabeverfahren nicht zu verzögern. In der Sprachsyntheseeinrichtung SSV wird die Summe dieser Steuersignale verarbeitet, indem hieraus eine z.B. akustische Nachricht aufgebaut wird, die auch mehrteilig sein kann. Sind beispielsweise für die Auswertung der Lautstärke L mehrere Schwellwerte Sᵢ vorgesehen, so kann in der Zentraleinheit ZE eine Quantisierung festgestellt werden. Es wird dann z.B. festgestellt, daß das Eingangssignal für eine korrekte Erkennung nur etwas zu leise ist. Die auf das dementsprechende Steuersignal ausgesandte Nachricht würde z.B. lauten: "Sprechen Sie bitte etwas lauter".

Wie in Fig. 2 dargestellt prüft die Zentraleinheit ZE die Schwellwerte aller vorgegebenen Parameter vor jeder durch ein Fehlersignal bewirkten Sprachausgabe durch. Erst das durch eine zentrale Recheneinheit CPU innerhalb der Zentraleinheit ZE zusammengestellte Summenergebnis aller Steuersignale wird an die Sprachsyntheseeinrichtung SSV und dort in eine digitale und nach der Analogwandlung hörbare Nachricht umgesetzt. Wird also von der Zentraleinheit ZE auch festgestellt, daß zu schnell gesprochen wird lautet die fertige Nachricht an den Anwender: "Sprechen Sie bitte etwa lauter und langsamer".

Im Unterschied zu Systemen nach dem Stand der Technik enthält die erfindungsgemäß ausgegebene Nachricht eine auf den konkreten Fall bezogene, individualisierte Nachricht, die sehr zielgerichtet zu einer Verbesserung der Spracherkennung führt.

In dem vorliegenden Ausführungsbeispiel wird die Nachricht in hörbarer Form an den Anwender übermittelt, nämlich als synthetisch generierter Satz (eine Mitteilung OUT). Zur Ausgabe der Mitteilung OUT wird ein digitales Signal in der Sprachsyntheseeinrichtung SSV erzeugt und über Verbindungsleitungen VL mit Kanalbündelungsmittel KM und Kanalaufzweigungsmittel KM⁻¹ über die Vermittlungsstelle VS zu dem entsprechenden Telefonendgerät TEG übermittelt, um nach der Analogwandlung als S Sprachsignal mit einer konkreten Nachricht den Anwender zu erreichen.

Die Nachricht OUT kann über die vorstehend beschriebene Vorrichtung in umgekehrter Richtung auch statt als hörbare Nachricht in sonstiger Weise verarbeitet werden. Beispielsweise kann die Nachricht an dem Telefonendgerät TEG dem Anwender angezeigt werden, z.B. an einem Bildschirmtelefon bzw. einem PC mit integriertem Telefon oder einem Display.

In Abwandlung von dem in Fig.2 dargestellten Signalfluß kann die Fehleranalyse auch aus der Spracherkennung SE ausgegliedert und innerhalb der Einrichtung zur Spracherkennung SEV nebengeordnet sein. Damit kann die zur Verfügung stehende Rechenleistung der Spracherkennung SE voll auf diese eine Aufgabe verwendet werden, da die Analyse der Ergebnisse auf Fehler parallel dazu in einem kontinuierlichen Prozeß anhand der Untersuchung der vorstehend genannten Parameter auf Schwellwertüberschreitung in Schwellwertmeßeinrichtungen SW durchgeführt werden kann. Bei Schwellwertüberschreitungen kann dann selektiv eine Fehleranalyse durchgeführt werden, so daß in dem beschriebenen nutzerunabhängigen System auch bei engen Schwellwerten die gesamte Belastung für ein System vertretbar bleiben. Eine weitere Möglichkeit besteht in der Vorgabe von Eingangsschwellwerten, die schnell fallabhängig nachgeführt bzw. angepaßt werden. So wird insgesamt eine sichere Konvergenz auf geringe Fehlerquoten bei minimaler Anzahl von Aufforderungen an den Anwender bzw. systeminternen Regelvorgängen erreicht.

## Patentansprüche

1. Verfahren zur Spracherkennung,
bei dem während der Spracherkennung eines Sprachsignals (IN) festgestellt wird, ob bei der Spracherkennung ein Fehler auftritt, und falls ein entsprechender Fehler festgestellt wird, mindestens ein Sprechparameter des Sprachsignals (IN) analysiert wird und
bei Über- oder Unterschreiten eines Schwellwertes (S) durch den Sprechparameter eine auf die Wiedereinhaltung des für den Sprechparameter festgelegten Wertebereichs individualisierte Nachricht (OUT) an den Anwender ausgegeben wird, mit welcher er zur erneuten Eingabe mit an den Sprachparameter angepaßter Korrektur aufgefordert wird.

2. Verfahren nach Anspruch 1,
**dadurch gekennzeichnet,**
**daß** als vorbestimmter Sprechparameter ein Signal-Rausch-Abstand (SNR) des eingegebenen Sprachsignals (IN) überwacht wird.

3. Verfahren nach einem der vorhergehenden Ansprüche,
**dadurch gekennzeichnet,**
**daß** als vorbestimmter Sprechparameter die Einhaltung eines bestimmten Bereichs des Frequenzspektrums (Δf) des eingegebenen Sprachsignals (IN) überwacht wird.

4. Verfahren nach einem der vorhergehenden Ansprüche,
**dadurch gekennzeichnet,**
**daß** als vorbestimmter Sprechparameter die Sprechgeschwindigkeit (v) innerhalb des eingegebenen Sprachsignals (IN) überwacht wird.

5. Verfahren nach einem der vorhergehenden Ansprüche,
**dadurch gekennzeichnet,**
**daß** als vorbestimmter Sprechparameter die Lautstärke (L) des eingegebenen Sprachsignals überwacht wird.

6. Verfahren nach einem der vorhergehenden Ansprüche 3-5,
**dadurch gekennzeichnet,**
**daß** mehrere Sprechparameter (SNR, Δf, v. L) gleichzeitig überwacht werden.

7. Verfahren nach einem der vorhergehenden Ansprüche,
**dadurch gekennzeichnet,**
**daß** die Überwachung jedes der Sprechparameter (SNR, Δf, v, L) in dem digitalisierten Sprachsignal (IN) vorgenommen wird.

8. Verfahren nach einem der vorhergehenden Ansprüche,
**dadurch gekennzeichnet,**
**daß** die Aufforderung (OUT) an den Anwender akustisch in Form eines gesprochenen kurzen Satzes über eine Sprachsyntheseeinrichtung (SSV) ausgegeben wird.

9. Verfahren nach einem der vorhergehenden Ansprüche,
**dadurch gekennzeichnet,**
**daß** für den Sprechparameter (SNR, Δf, v, L) zur weiteren Präzisierung der an den Anwender ergehenden Nachricht (OUT) mehr als ein Schwellwert (S) vorgesehen ist.

10. Verfahren nach einem der vorhergehenden Ansprüche,
**dadurch gekennzeichnet,**
**daß** der Sprechparameter in Echtzeit aus dem eingegebenen und verarbeitenden Sprachsignal (IN) bestimmt wird.

11. Vorrichtung zur Spracherkennung mit mindestens einer Einrichtung zum Verarbeiten digitalisierter Daten eines Sprachsignals (IN), insbesondere nach einen der Ansprüche 1-10, und einer Sprachausgabe, mit
- einer Einrichtung zur Spracherkennung mit Analyse und Überwachung eines Sprechparameters des Sprachsignals (IN) und zur Fehleruntersuchung bei der Spracherkennung,
- einer Einrichtung zum Feststellen einer Überschreitung eines Schwellwertes des Sprechparameters beim Auftreten eines Fehlers bei der Spracherkennung und
- einer Einrichtung zur Erzeugung und Ausgabe eines in Abhängigkeit von der Überschreitung eines Schwellwert für den Sprechparameter (SNR, Δf, v, L) generierten Hinweises in digitaler oder analoger Form, insbesondere einer Sprachsyntheseeinrichtung (SSV) sowie
- einer Einrichtung zur Übermittlung des Hinweises an einen das Sprachsignal (IN) erzeugenden Anwender.

12. Vorrichtung nach Anspruch 11,
**dadurch gekennzeichnet,**
**daß** als Einrichtung zur Übermittlung des Hinweises an einen das Sprachsignal erzeugenden Anwender ein digitales oder analoges Telefonsystem vorgesehen ist.

13. Telekommunikationssystem mit Spracherkennung mit
- einer Vielzahl von Telefonendgeräten (TEG),
- Wandlereinrichtungen zur Digital/Analog- und Analog/Digital- Wandlung (D/A, A/D) und Signalaufbereitung,
- einer Verbindungsleitung (VL) für jedes der Telefonendgeräte (TEG),
- Kanalbündelungs- und Kanalaufzweigungsmitteln (KM, KM⁻¹) ,
- mindestens einer Vermittlungsstelle (VS) und
- mindestens einer Vorrichtung nach Anspruch 11 oder 12.

## Claims

1. Voice recognition method in which it is determined during the voice recognition of a speech signal (IN) whether an error has occurred in the voice recognition, and if a corresponding error is determined, at least one speech parameter of the speech signal (IN) is analysed and in the event of a threshold value (S) being exceeded or undershot by the speech parameter a message (OUT) which is individually adapted to provide re-compliance with the value range specified for the speech parameter is issued to the user, said message (OUT) prompting the user to re-input with correction adapted to the speech parameter.

2. Method according to Claim 1, **characterized in that** a signal-to-noise ratio (SNR) of the input voice signal (IN) is monitored as a predetermined speech parameter.

3. Method according to one of the preceding claims, **characterized in that** compliance with a specific range of the frequency spectrum (Δf) of the input voice signal (IN) is monitored as a predetermined speech parameter.

4. Method according to one of the preceding claims, **characterized in that** the speaking speed (v) within the input voice signal (IN) is monitored as a predetermined speech parameter.

5. Method according to one of the preceding claims, **characterized in that** the volume (L) of the input voice signal is monitored as a predetermined speech parameter.

6. Method according to one of the preceding Claims 3-5, **characterized in that** a plurality of speech parameters (SNR, Δf, v, L) are monitored simultaneously.

7. Method according to one of the preceding claims, **characterized in that** each of the speech parameters (SNR, Δf, v, L) is monitored in the digitized voice signal (IN).

8. Method according to one of the preceding claims, **characterized in that** the request (OUT) is issued to the user audibly in the form of a spoken short record by means of a speech synthesizing device (SSV).

9. Method according to one of the preceding claims, **characterized in that** more than one threshold value (S) is provided for the speech parameter (SNR, Δf, v, L) for making the message (OUT) issued to the user more precise.

10. Method according to one of the preceding claims, **characterized in that** the speech parameter is determined in real time from the input voice signal (IN) to be processed.

11. Voice recognition apparatus having at least one device for processing digitized data of a voice signal (IN), in particular according to one of Claims 1-10, and a speech-outputting means, having
- a voice recognition device with analysis and monitoring of a speech parameter of the speech signal (IN) and for examination for errors during the speech recognition,
- a device for determining when the speech parameter exceeds a threshold value when an error occurs in the speech recognition, and
- a device for generating and outputting a notification in digital or analogue form, in particular of a speech synthesizing device (SSV), said notification being generated as a function of a threshold value for the
speech parameter (SNR, Δf, v, L) being exceeded, and
- a device for transmitting the notification to a user who generates the voice signal (IN).

12. Apparatus according to Claim 11, **characterized in that** a digital or analogue telephone system is provided as a device for transferring the notification to a user who generates the voice signal.

13. Telecommunications system with voice recognition, having
- a multiplicity of telephone terminals (TEG),
- converters for digital/analogue and analogue/digital conversion (D/A, A/D) and signal conditioning,
- a connecting line (VL) for each of the telephone terminals (TEG),
- channel-bundling and channel-splitting means (KM, KM⁻¹),
- at least one switching office (VS) and
- at least one apparatus according to Claim 11 or 12.

## Revendications

1. Procédé de reconnaissance vocale dans lequel
- pendant la reconnaissance vocale d'un signal vocal (IN), il est constaté si une erreur survient lors de la reconnaissance vocale et, en cas de constatation d'une erreur correspondante, au moins un paramètre vocal du signal vocal (IN) est analysé et
- en cas de dépassement d'une valeur seuil (S) par le haut ou par le bas par le paramètre vocal, un message (OUT) individualisé pour que la plage de valeurs définie pour le paramètre vocal soit de nouveau respectée est envoyé à l'utilisateur, message par lequel celui-ci est invité à procéder à une nouvelle entrée avec une correction adaptée au paramètre vocal.

2. Procédé selon la revendication 1, **caractérisé en ce qu'**est surveillé, en tant que paramètre vocal prédéterminé, un rapport signal / bruit (SNR) du signal vocal saisi (IN).

3. Procédé selon l'une des revendications précédentes, dans lequel est surveillé, en tant que paramètre vocal prédéterminé, le respect d'une plage déterminée du spectre de fréquences (Δf) du signal vocal saisi (IN).

4. Procédé selon l'une des revendications précédentes, dans lequel est surveillée, en tant que paramètre vocal prédéterminé, la vitesse de l'élocution (v) à l'intérieur du signal vocal saisi (IN).

5. Procédé selon l'une des revendications précédentes, dans lequel est surveillée, en tant que paramètre vocal prédéterminé, l'intensité sonore (L) du signal vocal saisi.

6. Procédé selon l'une des revendications 3 à 5, **caractérisé en ce que** plusieurs paramètres vocaux (SNR, Δf, v, L) sont surveillés simultanément.

7. Procédé selon l'une des revendications précédentes, **caractérisé en ce qu'**il est procédé à la surveillance de chacun des paramètres vocaux (SNR, Δf, v, L) dans le signal vocal numérisé (IN).

8. Procédé selon l'une des revendications précédentes, **caractérisé en ce que** l'invitation (OUT) est envoyée à l'utilisateur acoustiquement sous la forme d'une courte phrase parlée par l'intermédiaire d'un dispositif de synthèse vocale (SSV).

9. Procédé selon l'une des revendications précédentes, **caractérisé en ce que** plus d'une valeur seuil (S) est prévue pour le paramètre vocal (SNR, Δf, v, L) pour préciser davantage le message (OUT) envoyé à l'utilisateur.

10. Procédé selon l'une des revendications précédentes, **caractérisé en ce que** le paramètre vocal est déterminé en temps réel à partir du signal vocal (IN) saisi et à traiter.

11. Dispositif de reconnaissance vocale comprenant au moins un dispositif de traitement de données numérisées d'un signal vocal (IN), en particulier selon l'une des revendications 1 à 10, et une émission vocale, avec
- un dispositif de reconnaissance vocale avec analyse et surveillance d'un paramètre vocal du signal vocal (IN) et de recherche d'erreurs au niveau de la reconnaissance vocale,
- un dispositif de constatation d'un dépassement d'une valeur seuil du paramètre vocal en cas de survenance d'une erreur au niveau de la reconnaissance vocale et
- un dispositif de production et d'émission d'une indication, sous forme numérique ou analogique, générée en fonction du dépassement d'une valeur seuil pour le paramètre vocal (SNR, Δf, v, L), en particulier un dispositif de synthèse vocale (SSV) ainsi que
- un dispositif de transmission de l'indication à un utilisateur qui produit le signal vocal (IN).

12. Dispositif selon la revendication 11, **caractérisé en ce qu'**est prévu, en tant que dispositif de transmission de l'indication à un utilisateur qui produit le signal vocal, un système téléphonique numérique ou analogique.

13. Système de télécommunication avec reconnaissance vocale comprenant
- un grand nombre de terminaux téléphoniques (TEG),
- des dispositifs de conversion pour la conversion numérique / analogique et analogique / numérique (D/A, A/D) et pour le retraitement de signaux,
- une ligne de connexion (VL) pour chacun des terminaux téléphoniques (TEG),
- des moyens de concentration des canaux et de ramification des canaux (KM, KM⁻¹),
- au moins un centre de commutation (VS) et
- au moins un dispositif selon la revendication 11 ou 12.
